# EUROPEAN PATENT APPLICATION

(11) **EP 4 579 881 A1**
(43) Date of publication of application: **02.07.2025**
(21) Application number: 24222893.0
(22) Date of filing: 23.12.2024
(51) Int. Cl.: H01M 10/613, H01M 10/625, H01M 10/6567, H01M 50/204

(54) **BATTERY PACK AND BATTERY APPARATUS HAVING THE SAME**

(30) Priority: 27.12.2023 KR 20230193370
(71) Applicant: SAMSUNG SDI CO., LTD., Yongin-si, Gyeonggi-do 17084 (KR)
(72) Inventor: YOON, Jongwook, Yongin-si 17084 (KR)
(74) Representative: Marks & Clerk LLP

(57) **Abstract**

A battery pack and a battery apparatus utilize cooling fluid and cooling fluid circuitry for cooling battery cells in a normal operating state in which an event is not detected and extinguishing the event in an abnormal state. The cooling fluid circuitry controls inflow and outflow rates of the cooling fluid, such as a fluid pump or a fluid valve connected to an inlet and an outlet of the battery pack. In a normal operating state in which an event, such as ignition, explosion, or gas emission of battery cells, is not detected, the operating heat resulting from charging and discharging of battery cells may be quickly cooled through immersion-type liquid cooling of the battery cells. In response to the detection of an event, the event may be quickly extinguished using the cooling fluid by raising the fluid level of the cooling fluid to a preset elevated level.

## Description

### BACKGROUND

### 1. Field

The disclosure relates to a battery pack and a battery apparatus including a battery pack.

### 2. Description of the Related Art

Typically, secondary batteries can be charged and discharged, unlike primary batteries that are not rechargeable. Secondary batteries are used as energy sources for mobile devices, electric vehicles, hybrid vehicles, electric bicycles, and uninterruptible power supplies. Depending on the type of external devices to which they are applied, the secondary batteries may be used in the form of a single battery or a pack in which multiple batteries are connected and bundled into one unit.

Small mobile devices, such as mobile phones, can operate for a certain period of time with the output and capacity of a single battery. However, in cases where long-term operation or high-power operation is required, such as larger mobile devices including laptops or electric vehicles or hybrid vehicles that consume a lot of power, a pack containing multiple batteries is preferred for larger output and capacity and an output voltage or output current may be increased with the number of built-in batteries.

### SUMMARY

The present disclosure relates to embodiments of a battery pack in which battery cells are efficiently cooled using immersion-type liquid cooling and events are rapidly extinguished, and a battery apparatus including the battery pack. The battery pack or the battery apparatus including the battery pack is lightweight and compact as cooling fluid and cooling fluid circuitry are used for cooling battery cells in a normal state in which an event is not detected and extinguishing the event in an abnormal state, without additional configuration. Cooling fluid circuitry for controlling inflow and outflow rates of the cooling fluid, such as a fluid pump or a fluid valve connected to an inlet and an outlet, respectively, of the battery pack, are provided to cause the flow of the cooling fluid. In a normal state where an event, such as ignition, explosion, or gas emission of battery cells, is not detected, the operating heat resulting from charging and discharging of battery cells may be quickly cooled through immersion-type liquid cooling of the battery cells. In response to an event, such as ignition, explosion, or gas emission of battery cells, being detected, the event, such as ignition, explosion, or gas emission of battery cells, may be quickly extinguished using the cooling fluid by raising the fluid level of the cooling fluid to a preset elevated level in response to the event, compared to the fluid level of the cooling fluid in a normal state.

Additional aspects will be set forth in part in the description which follows and, in part, will be apparent from the description, or may be learned by practice of the presented embodiments of the present disclosure.

A battery pack of the disclosure may include battery cells, a housing that includes an accommodating space accommodating the battery cells and an inlet and an outlet for inflow and outflow of a cooling fluid in contact with the battery cells,
a pressure gauge within the accommodating space and configured to detect an internal pressure of the accommodating space, and a control unit configured to control at least one of an inflow rate of the cooling fluid through the inlet and an outflow rate of the cooling fluid through the outlet in response to an increase in the internal pressure of the accommodating space detected by the pressure gauge.

For example, the housing may include a first surface on which the inlet and the outlet are located together to form a U-turn path of the cooling fluid within the housing, and
a second surface facing the first surface in a first direction in which the battery cells are arranged and that has first and second terminals for electrical connection of the battery cells.

For example, the housing may have a length in the first direction corresponding to a long side, a width in a second direction corresponding to a short side, and a height in a third direction that intersects the first and second directions. The inlet and the outlet may be located at a height of a first level which is relatively low and at a height of a second level which is relatively high, respectively, in the third direction.

For example, the inlet and the outlet may be located at different diagonal positions in the second direction and the third direction.

For example, the control unit may be configured to raise the fluid level of the cooling fluid filling the accommodating space by controlling at least one of the inflow rate of the cooling fluid through the inlet or the outflow rate of the cooling fluid through the outlet in response to the occurrence of an event in which exhaust gas is discharged from at least one battery cell among the battery cells being detected by the pressure gauge.

For example, a fluid pump may be connected to the inlet to force the inflow rate of the cooling fluid through the inlet,
a fluid valve may be connected to the outlet side to control opening/closing or degree of openness of the outflow rate of the cooling fluid through the outlet, and the control unit may control at least one of the fluid pump or the fluid valve to i) increase the output of the fluid pump connected to the inlet side, ii) decrease the degree of openness of the fluid valve connected to the outlet side, or iii) close the fluid valve connected to the outlet side.

For example, the control unit may control the fluid pump and the fluid valve together to increase the inflow rate of the inlet and decrease the outflow rate of the outlet, thereby accelerating the rise in the fluid level of the cooling fluid.

For example, the control unit may increase the output of the fluid pump on the inlet and may close the fluid valve on the outlet side to increase the inflow rate of the cooling fluid through the inlet and to block the outflow rate of the cooling fluid through the outlet.

For example, the control unit may be configured to open the fluid valve in a normal operating state in which the occurrence of an event is not detected by the pressure gauge, and
may be configured to close the fluid valve in response to the occurrence of an event being detected by the pressure gauge.

For example, in response to the detection of the occurrence of an event by the pressure gauge, the control unit may raise the fluid level of the cooling fluid to a fourth level, which is higher than a third level which is the fluid level of the cooling fluid in a normal operating state.

For example, the battery pack may further include a cover including an outlet at a fifth level higher than the battery cell and configured to discharge exhaust gas from a vent at an upper position of at least one battery cell among the battery cells, and
the control unit may increase the fluid level of the cooling fluid to the fourth level substantially equal to the fifth level in response to the occurrence of an event being detected by the pressure gauge.

For example, in response to the occurrence of an event being detected by the pressure gauge, the fluid level of the cooling fluid may have risen to the fourth level and may flow over through the outlet under the control by the control unit.

For example, in a normal operating state in which the occurrence of an event is not detected by the pressure gauge, the third level of the cooling fluid filling the accommodating space may be set substantially equal to or higher than a second level where the outlet is located.

A battery apparatus according to another aspect of the disclosure may include
the battery pack, and cooling fluid circuitry connected between the inlet and the outlet. The cooling fluid circuitry may include a fluid pump connected to the inlet to force the inflow rate of the cooling fluid through the inlet, a fluid valve connected to the outlet to control the opening/closing or degree of openness and the outflow rate of cooling fluid through the outlet, a heat exchanger connected between the fluid pump and the fluid valve to cool the cooling fluid converted into a high temperature state while passing through an accommodating space in which the battery cells are accommodated, and a fluid tank for storing the cooling fluid downstream of the heat exchanger.

For example, the control unit may raise the level of the cooling fluid filling the accommodating space by controlling at least one of the inflow rate of the cooling fluid through the inlet or the outflow rate of the cooling fluid through the outlet in response to the occurrence of an event in which exhaust gas is discharged from at least one battery cell among the battery cells being detected by the pressure gauge.

For example, the control unit may be configured to control at least one of the fluid pump or the fluid valve to i) increase the output of the fluid pump, ii) decrease the degree of openness of the fluid valve, or iii) close the fluid valve.

For example, the control unit may control the fluid pump and the fluid valve together to increase the inflow rate of the cooling fluid through the inlet and decrease the outflow rate of the cooling fluid through the outlet, thereby accelerating the rise in the fluid level of the cooling fluid.

For example, the control unit may increase the output of the fluid pump on the inlet and may close the fluid valve on the outlet to increase the inflow rate of the cooling fluid through the inlet and to block the outflow rate of the cooling fluid through the outlet.

For example, in response to the occurrence of an event being detected by the pressure gauge, the control unit may raise the fluid level of the cooling fluid to the fourth level, which is higher than the third level that is the fluid level of the cooling fluid in a normal operating state.

For example, the battery apparatus may further include a cover including an outlet at a fifth level higher than the battery cell and configured to discharge exhaust gas from a vent at an upper position of at least one battery cell among the battery cells, and
the control unit may increase the fluid level of the cooling fluid to the fourth level substantially equal to the fifth level in response to the occurrence of an event being detected by the pressure gauge.

The present invention also provides a method of cooling a battery pack as defined above, wherein the method comprises passing a flow of cooling fluid in contact with the plurality of battery cells through the inlet and the outlet for the inflow and the outflow of the cooling fluid as defined above and below.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a part exploded perspective view of a battery pack according to an embodiment;
FIG. 2 is a diagram of a battery apparatus according to an embodiment;
FIG. 3 is a partial and schematic cross-sectional view taken along line III-III of the battery pack shown in FIG. 1, showing fluid levels of different cooling fluids and levels of internal components of the battery pack;
FIG. 4 is a diagram schematically showing a fluid level of a cooling fluid in the battery pack shown in FIG. 1 in a normal state; and
FIG. 5 is a diagram schematically showing a fluid level of a cooling fluid that has risen in response to the occurrence of an event in the battery pack shown in FIG. 1.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack and a battery apparatus including the battery pack according to an embodiment are described with reference to the drawings.

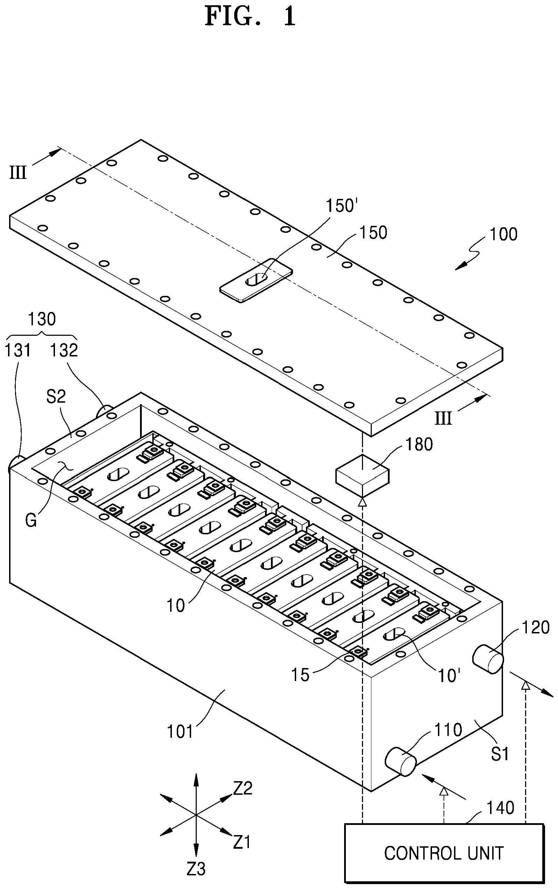

FIG. 1 is an exploded perspective view of a battery pack according to an embodiment.

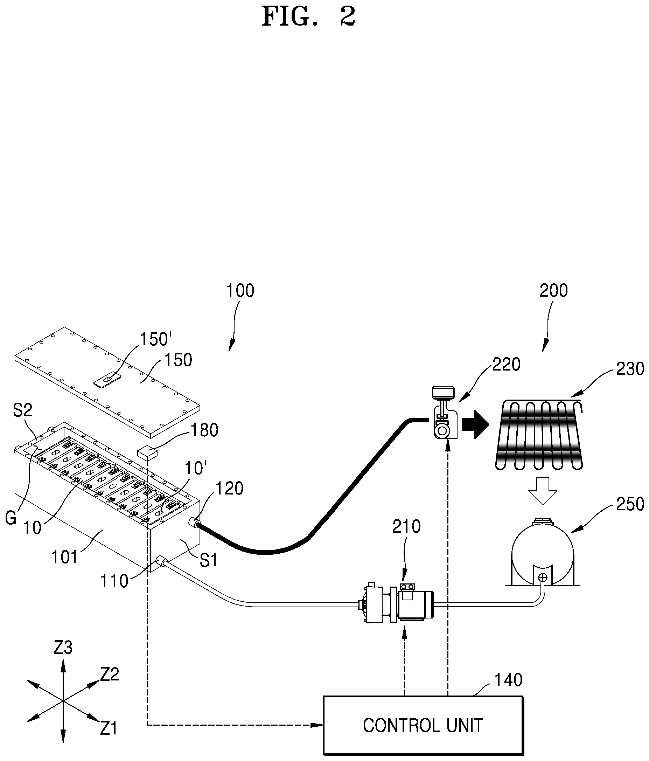

FIG. 2 is a diagram of a battery apparatus according to an embodiment.

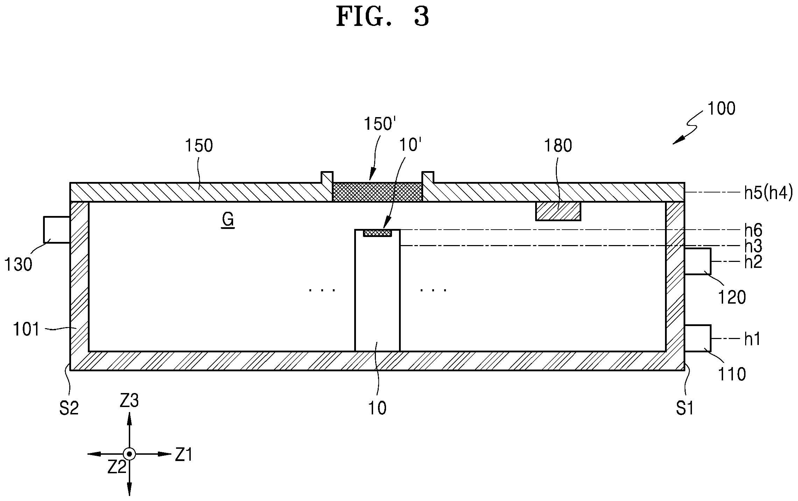

FIG. 3 is a cross-sectional view taken along line III-III of the battery pack shown in FIG. 1, showing fluid levels of different cooling fluids and levels of internal components of the battery pack.

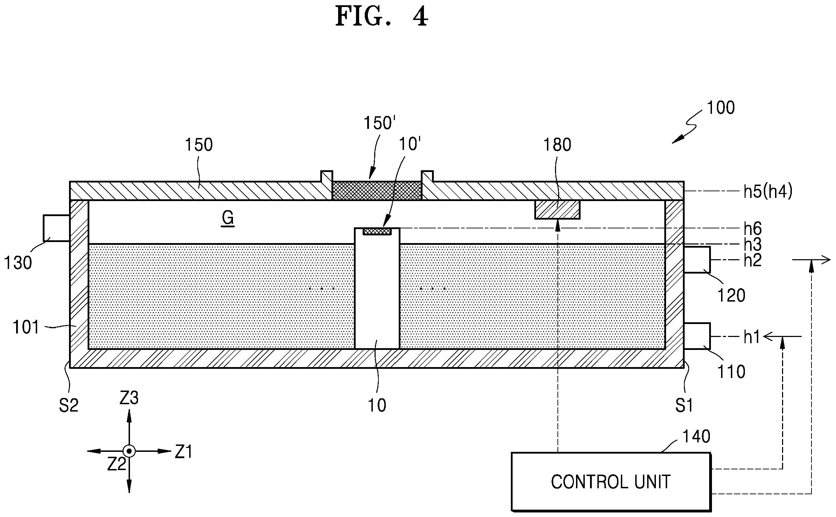

FIG. 4 is a diagram showing a fluid level of a cooling fluid in the battery pack shown in FIG. 1 in a normal state.

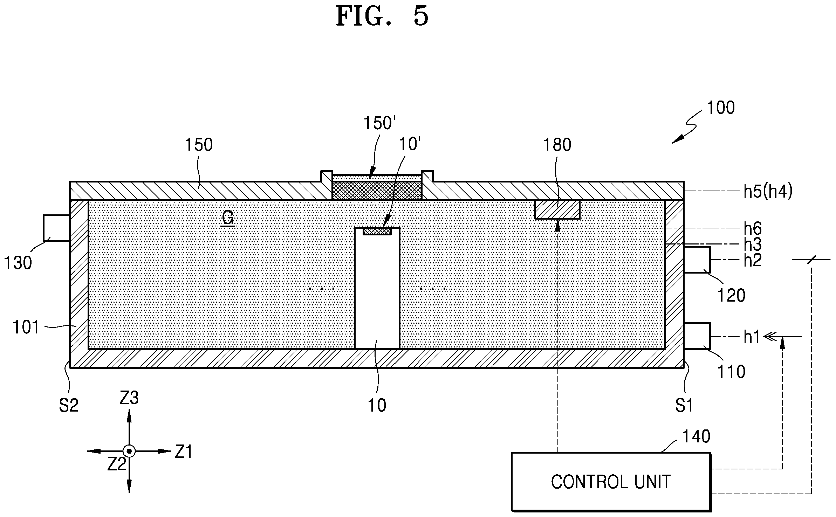

FIG. 5 is a diagram showing a fluid level of a cooling fluid that has risen in response to the occurrence of an event in the battery pack shown in FIG. 1.

Referring to the drawings, a battery pack 100 according to an embodiment may include a plurality of battery cells 10, a housing 101 including an accommodating space G for accommodating the plurality of battery cells 10 and a cooling fluid in contact with the plurality of battery cells 10. The housing 101 includes an inlet 110 and an outlet 120 for inflow and outflow of the cooling fluid, a pressure gauge 180 within the accommodating space G and configured to detect an internal pressure in the accommodating space G, and a control unit 140 configured to control an inflow rate of the cooling fluid through the inlet 110 and an outflow rate of the cooling fluid through the outlet 120 in response to an increase in the internal pressure in the accommodating space G detected by the pressure gauge 180.

A battery apparatus may include the battery pack 100 and cooling fluid circuitry 200 connected between the inlet 110 and the outlet 120. The cooling fluid circuitry 200 may include a fluid pump 210 connected to the inlet 110 side to force the inflow rate of the inlet 110, a fluid valve 220 connected to the outlet 120 to control opening/closing or opening degree of the outflow rate of the outlet 120, a heat exchanger 230 between the fluid pump 210 and the fluid valve 220 configured to cool the cooling fluid that was heated while passing through the accommodating space G in which the plurality of battery cells 10 are accommodated, and a fluid tank 250 for storing the cooling fluid downstream of the heat exchanger 230.

Hereinafter, the battery pack 100 and the battery apparatus including the battery pack 100 according to an embodiment are described in more detail.

The battery pack 100 according to an embodiment may include the housing 101 that includes the accommodating space G in which the plurality of battery cells 10 arranged in a first direction Z1 are accommodated. The housing 101 may be a roughly cuboidal box including a long side corresponding to a length extending in the first direction Z1, a short side corresponding to a width extending in a second direction Z2 different from the first direction Z1, and a height extending in a third direction Z3 intersecting (crossing) the first direction Z1 and the second direction Z2.

The inlet 110 and the outlet 120 may be on one side of the housing 101 to form a fluid connection with the cooling fluid circuitry 200 that provides a circulation path of the cooling fluid in charge of cooling and extinguishing of the battery pack 100, and the fluid pump 210 and the fluid valve 220 for controlling the flow rate of the cooling fluid may be connected to the inlet 110 and the outlet 120, respectively. In an embodiment, the battery cells 10 in a normal state may be cooled by the cooling fluid filling the accommodating space G where the plurality of battery cells 10 are accommodated, and in response to an event, such as overheating, explosion, flame, or ignition of the battery cells 10, occurring in at least one battery cell 10, the battery cell 10 may be extinguished, thereby eliminating the event. Herein, the fact that the cooling fluid for cooling battery cells 10 extinguishes the battery cell 10 in which an event has occurred may mean that the event, such as overheating, explosion, flame, and ignition of the battery cell 10, is calmed or alleviated so that the event of the battery cell 10 does not progress any further and is thereby eliminated. In this sense, "extinguishing" may be understood broadly as eliminating an event, such as overheating, explosion, flame, and ignition, rather than extinguishing the flame of the battery cell 10. As described below, in an embodiment, the cooling fluid filling the accommodating space G where the plurality of battery cells 10 are accommodated may cool the battery cells 10 at a relatively low third level h3 in a normal state, e.g., at the third level h3 lower than the height of the battery cells 10, and may extinguish the battery cells 10 at a relatively high fourth level h4, e.g., at the fourth level h4 higher than the height of the battery cells 10, in response to the occurrence of an event.

In an embodiment, the battery cell 10 may include a vent 10' for discharging exhaust gas of the battery cell 10 at an upper position of the battery cell 100, and the vent 10' may be at the upper position of the battery cell 10, for example, at a sixth level h6, which is the highest height of the battery cell 10. In one or more embodiments, in a normal operating state, the fluid level of the cooling fluid may be maintained at the third level h3, which is lower than the sixth level h6 where the vent 10' is at the upper position of the battery cell 10, and thus, the exhaust gas generated from the battery cell 10 may be discharged through the vent 10' in response to the occurrence of an event, thereby preparing for the occurrence of an event. In response to the event occurring, the fluid level of the cooling fluid may rise to the fourth level h4, which is higher than the sixth level h6 where the vent 10' is at the upper position of the battery cell 10, thereby immersing (or submerging) the entire battery cell 10 and extinguishing the event occurring in the battery cell 10. In an embodiment, the cooling fluid may be a liquid with a relatively higher heat capacity than gas, such as air, and the plurality of battery cells 10 accommodated within the accommodating space G may be cooled through liquid cooling by being immersed in (submerged in) and being in direct contact with the cooling fluid.

In an embodiment, in response to an event occurring in which exhaust gas is discharged from one battery cell 10 among the plurality of battery cells 10, the occurrence of such an event may be detected through an increase in pressure in the accommodating space G where the plurality of battery cells 10 are accommodated, and the exhaust gas discharged into the accommodating space G through the vent 10' of the battery cell 10 may increase the pressure of the accommodating space G, which is captured or detected as the occurrence of an event by the pressure gauge 180. In response to the occurrence of an event being detected, i.e., after the exhaust gas of the battery cell 10 is discharged from the vent 10', the vent 10' where the discharge of the exhaust gas has been completed may be immersed in the cooling fluid that has risen to the relatively high fourth level h4, thereby extinguishing flames discharged with the exhaust gas, under the control of the control unit 140 that captures the occurrence of an event. In some embodiments, even after the event in which the exhaust gas is discharged is detected, residual exhaust gas may continue to be discharged through the vent 10' of the battery cell 10, and the fourth level h4 corresponding to the occurrence of an event may be set to a relatively lower height than the vent 10' formed at the upper position of the battery cell 10 to prevent the vent 10' of the battery cell 10 from being immersed in the cooling fluid that has risen to the fourth level h4. For example, in some embodiments, the fourth level h4, to which the cooling fluid has risen in response to the event, may be set higher than the sixth level h6 where the vent 10' of the battery cell 10 is formed at the upper position of the battery cell 10. For example, considering the time required to raise the fluid level to the relatively high fourth level h4 in response to the event, the fourth level h4 corresponding to the event may be set to a higher level than the sixth level h6 where the vent 10' of the battery cell 10 is at the upper position of the battery cell 10. In an embodiment, the fourth level h4, to which the cooling fluid has risen in response to the event, may be set to be higher than the sixth level h6 where the vent 10' of the battery cell 10 is at the upper position of the battery cell 10. The fluid level of the cooling fluid rises to the relatively raised fourth level h4 after the exhaust gas discharged from the vent 10' of the battery cell 10 fills the accommodating space G, and an increase in pressure in the accommodating space G is detected according to the occurrence of an event, even if the relatively raised fourth level h4 is set to a level higher than the sixth level h6 where the vent 10' of the battery cell 10 is at the upper position of the battery cell 10 (i.e., the fluid level of the cooling fluid rises after the exhaust gas is discharged sufficiently to cause an increase in pressure in the accommodating space G in which the battery cell 10 is accommodated). In addition, as described above, although the occurrence of an event is detected through the pressure gauge 180 detecting the increase in pressure in the accommodating space G, it takes some time for the fluid level in the accommodating space G to rise to the relatively high fourth level h4 under the control of the control unit 140 detecting the occurrence of an event, i.e., under the control of the control unit 140, which increases the inflow rate of the inlet 110 and reduces or blocks the outflow rate of the outlet 120. The discharge of exhaust gas through the vent 10' of the battery cell 10 may not be hindered by an increase in the fluid level of the cooling fluid in which the vent 10' of the battery cell 10 is immersed or submerged, even though the fluid level of the cooling fluid (fourth level h4) corresponding to the event is set to a level higher than the sixth level h6 where the vent 10' of the battery cell 10 is at the upper position of the battery cell 10 because the fluid level of the cooling fluid filling the accommodating space G rises through the control unit 140, which detects the occurrence of an event through the pressure gauge 180 which detects an increase in pressure in the accommodating space G after the exhaust gas is sufficiently discharged to cause the increase in pressure in the accommodating space G.

The fluid pump 210 and the fluid valve 220 for controlling the inflow rate of the cooling fluid through the inlet 110 and the outflow rate of the cooling fluid through the outlet 120 may be connected to the inlet 110 and the outlet 120 of the housing 101, respectively. A battery apparatus according to an embodiment may include the battery pack 100 and the cooling fluid circuitry 200 connected between or to the inlet 110 and the outlet 120 of the battery pack 100. The cooling fluid circuitry 200 may include the fluid pump 210 and the fluid valve 220 for controlling the inflow rate of the inlet 110 and the outflow rate of the outlet 120 of the battery pack 100, respectively, and the cooling fluid circuitry 200 may further include a heat exchanger 230 connected between the fluid pump 210 and the fluid valve 220 to cool the cooling fluid that was heated while passing through the accommodating space G, and a fluid tank 250 for storing the cooling fluid connected downstream of the heat exchanger 230 to store the cooling fluid cooled by the heat exchanger 230.

In an embodiment, the battery pack 100 may include the control unit 140 for controlling the inflow rate of the cooling fluid through the inlet 110 and the outflow rate of the cooling fluid through the outlet 120, and may further include the pressure gauge 180 for detecting an increase in pressure in the accommodating space G in response to the occurrence of an event in which exhaust gas is discharged from at least one of the plurality of battery cells 10 accommodated in the accommodating space G. In response to the occurrence of an event being detected by the pressure gauge 180, the control unit 140 may control the inflow rate of the inlet 110 and the outflow rate of the outlet 120 to raise the fluid level of the cooling fluid to a height of the fourth level h4 higher than the fluid level (third level h3) of the cooling fluid in a normal operating state (i.e., a normal state in which the occurrence of an event is not detected through the pressure gauge 180). In an embodiment, by raising the fluid level of the cooling fluid to the fourth level h4 higher than the third level h3 in a normal state in response to the occurrence of an event in which the exhaust gas is discharged from at least one of the battery cells 10 (e.g., by raising the fluid level of the cooling fluid to the height of the fourth level h4 higher than the height of the battery cell 10), the entire battery cell 10 may be immersed (submerged) in the cooling fluid, thereby eliminating overheating of the battery cell 10, and extinguishing the flame of the battery cell 10.

In an embodiment, the battery pack 100 may include the inlet 110 and the outlet 120 which form a fluid connection with the battery pack 100 and are positioned on a first surface S1 of the housing 101. First and second terminals 131 and 132 which form an electrical connection with the battery pack 100 are positioned on a second surface S2 of the housing 101. The first surface S1 faces the second surface S1 in the first direction Z1. As such, in an embodiment, the housing 101 may include the first surface S1 where the inlet 110 and the outlet 120 are formed for inflow and outflow of the cooling fluid, and the second surface S2 where the first and second terminals 131 and 132 are formed for electrical input and output, and the first and second surfaces S1 and S2 may face each other in the first direction Z1 in which the battery cells 10 are arranged or in the second direction Z2 crossing the first direction Z1. In an embodiment, the first and second surfaces S1 and S2 may face each other in the first direction Z1 along which the battery cells 10 are arranged. The inlet 110 and the outlet 120 for the inflow and outflow of the cooling fluid may be on the first surface S1 of the housing 101 and may be formed at a first level h1 and a second level h2, respectively, which are different from each other in the third direction Z3. In a normal state in which the occurrence of an event is not detected, the inflow rate through the inlet 110 formed at the relatively low first level h1 and the outflow rate through the outlet 120 formed at the relatively high second level h2 are balanced with each other (e.g., in equilibrium), thereby maintaining the cooling fluid at the constant (or substantially constant) third level h3 in the accommodating space G. In an embodiment, in a normal state, the third level h3 of the cooling fluid may be maintained by balancing the inflow rate through the inlet 110 and the outflow rate through the outlet 120, and the third level h3 may be set to a higher level than the first and second levels h1 and h2 where the inlet 110 and outlet 120 are located, respectively. In an embodiment, as the first level h1 where the inlet 110 is formed is set to a lower level than the second level h2 where the outlet 120 is located, the cooling fluid introduced through the inlet 110 may fill the accommodating space G by increasing the fluid level from the lower part of the accommodating space G toward the upper part of the accommodating space G where the outlet 120 is located. The third level h3 in a normal state or the fourth level h4 in response to the occurrence of an event may be achieved by filling the housing 101 from the lower part to the upper part thereof, and the third and fourth levels h3 and h4 set in response to the normal state and the occurrence of an event, respectively, may be achieved in a normal state and the event occurrence after being adjusted by controlling the inflow rate through the inlet 110 and the outflow rate through the outlet 120.

The inlet 110 and the outlet 120 may be at the first and second levels h1 and h2 different from each other in the third direction Z3 on a plane of the first surface S1 formed by the second and third directions Z2 and Z3 of the housing 101. Being located at different positions in the second direction Z2 as well as the third direction Z3 on the first surface S1, the inlet 110 and the outlet 120 may be located diagonally from each other in the second and third directions Z2 and Z3. As such, through the inlet 110 and the outlet 120 formed diagonally on the first surface S1 of the housing 101, a path of the cooling fluid that passes evenly (or substantially evenly) in the second and third directions Z2 and Z3 from the bottom left where the inlet 110 is located to the top right where the outlet 120 is located may be in the accommodating space G where the plurality of battery cells 10 are accommodated within the housing 101. Through the inlet 110 and the outlet 120 formed diagonally on the first surface S1 of the housing 101, the U-turn path of the cooling fluid may be achieved. The inlet 110 and outlet 120 may also be located at different first and second levels h1 and h2 in the third direction Z3 so that the cooling fluid passes through the accommodating space G evenly (or substantially evenly) in the third direction Z3. The inlet 110 may be located at the relatively low first level h1, and the outlet 120 may be located at the relatively high second level h2. The second level h2 where the outlet 120 is located may be set to be substantially equal to or lower than the third level h3, which is a level of the cooling fluid in a normal state and may be set to a height of the battery cell 10, for example, a level lower than the third level h3 which is lower than the sixth level h6 where the vent 10' is located at the upper position of the battery cell 10.

The first and second terminals 131 and 132 for electrical input and output may be on the second surface S2 of the housing 101, and the first and second terminals 131 and 132 included in an input/output terminal 130 having different polarities may be electrically connected to the plurality of battery cells 10 accommodated in the accommodating space G of the housing 101. The plurality of battery cells 10 accommodated in the accommodating space G may be connected to an external device, for example, an external load or a charger, through the first and second terminals 131 and 132, and may be connected to the external load to supply power while being discharged or may be connected to the external charger to be charged. The first and second terminals 131 and 132 may form a charging and discharging path of the battery pack 100 by providing an electrical connection between the plurality of battery cells 10 inside the housing 101 and the external device outside the housing 101.

A cover 150 may be on the upper part of the housing 101, and a discharge port or an outlet 150' for exhausting exhaust gas discharged from at least one of the plurality of battery cells 10 accommodated in the housing 101 may be on the cover 150. As described below, in an embodiment, the outlet 150' may be configured to detect a pressure difference between the inside and the outside of the outlet 150' and to react according to the pressure difference. In one or more embodiments, the outlet 150' may be opened or closed according to the pressure difference between the inside and the outside of the outlet 150'. For example, the outlet 150' may be opened in response to the internal pressure being higher than the external pressure and may be closed in response to the internal pressure being lower than the external pressure. As described below, in an embodiment, the cooling fluid flowing into the housing 101 through the inlet 110 or flowing out of the housing 101 through the outlet 120 may eliminate an event, such as ignition or explosion, by filling the accommodating space G inside the housing 101, as the net inflow into the housing 101 increases under the control of the control unit 140 that detects the occurrence of an event, such as ignition or explosion from the plurality of battery cells 10 accommodated in the housing 101, and, for example, may extinguish the flame by immersing the plurality of battery cells 10 accommodated in the accommodating space G. In an embodiment, the occurrence of an event may be detected through the pressure gauge 180 inside the accommodating space G that is configured to detect an increase in pressure in the accommodating space G in response to the occurrence of an event or discharge of the exhaust gas from the battery cell 10. An excess cooling fluid that exceeds the volume of the accommodating space G may flow out of the battery pack 100 through the outlet 150' formed on the cover 150, e.g., through the outlet 150' at the highest fifth level h5 of the battery pack 100, e.g., through the outlet 150' on the cover 150 at the fifth level h5. As such, in an embodiment, the outlet 150' on the cover 150 may provide a discharge location for discharging the excess cooling fluid exceeding the volume of the accommodating space G or overflowing from the accommodating space G to the outside together with the exhaust gas discharged from the plurality of battery cells 10. For example, in an embodiment, unlike a general vent 10' that passes gases such as exhaust gas, the outlet 150' on the cover 150 may be or include a structure or a member that is configured to allow liquid such as cooling fluid to pass through or permeate together with gas such as exhaust gas, i.e., a structure or a member through which both gas and liquid are passable and permeable. For example, the outlet 150' may fluidly connect the inside and outside of the housing 101 in response to the pressure increase, which may mean that the outlet 150' allows fluid (e.g., gas such as exhaust gas and liquid such as cooling fluid) to pass or permeate between the inside and outside of the housing 101 in response to the occurrence of an event.

In an embodiment, the battery pack 100 may eliminate or substantially eliminate the event (e.g., extinguish flames) of the battery cell 10 by immersing (submerging) the battery cell 10. The exhaust gas emitted through the outlet 150' due to the exhaust gas emitted from the battery pack 100 may be prevented (or at least mitigated) from causing a flame or spreading the flame to the outside due to the cooling fluid that fills the housing 101 to at least the level adjacent to the outlet 150'. For example, the outlet 150' may be configured to form a communication between the inside and outside of the housing 101 in response to the occurrence of an event and it may communicate the inside of the housing 101 to the outside through means of which high-temperature exhaust gas and flames may be discharged to the outside and could cause an explosion or flame propagation due to contact between the exhaust gas and external oxygen. However, in an embodiment, by applying an immersion method for eliminating the event, the explosion or propagation of flames outside the battery pack 100 may be blocked through the cooling fluid, the inflow and outflow of which through the inlet 110 and outlet 120 is controlled, e.g., through the excess cooling fluid discharged to the outside through the outlet 150', which fills the inside of the housing 101 to the fluid level of the cooling fluid, which is to the relatively raised fourth level h4. Unlike an embodiment of the present disclosure, to block the propagation of flames to the outside without the extinguishing cooling fluid, a separate cooling or fire extinguishing structure may be applied to the outlet 150'. However, in an embodiment, fire or flame propagation at the outlet 150' may be blocked by the extinguishing cooling fluid that overflows through the outlet 150' or rises to at least about fifth level h5 of the outlet 150', and, for example, a series of explosions of the electric vehicle due to external ignition or propagation of flames at the outlet 150' may be prevented (or at least mitigated).

The battery apparatus according to an embodiment may include the battery pack 100 and the cooling fluid circuitry 200 fluidly connected to the battery pack 100. The cooling fluid circuitry 200 may be connected to the inlet 110 and the outlet 120 of the battery pack 100 to supply the cooling fluid to the battery pack 100 and/or to receive the cooling fluid discharged from the battery pack 100. The heat exchanger 230 may be connected between the fluid pump 210 connected to the inlet 110 and the fluid valve 220 connected to the outlet 120 to provide a circulation path between the inlet 110 and the outlet 120 of the battery pack 100 (e.g., to form a periodic temperature profile), and the fluid tank 250 may be connected between the fluid pump 210 and the fluid valve 220 (e.g., between the fluid pump 210 and the fluid valve 220 and downstream of the heat exchanger 230) to receive or supply the flow rate of the cooling fluid.

In an embodiment, the fluid pump 210 and the fluid valve 220 may be connected to the inlet 110 and the outlet 120 of the battery pack 100, respectively, and the fluid pump 210 may create a pressure difference to form an inflow rate toward each battery pack 100 and an outflow rate from the battery pack 100. For example, in an embodiment, by providing one fluid pump 210 in the cooling fluid circuitry 200 connected between the inlet 110 and the outlet 120 to control both the inflow rate and the outflow rate of the inlet 110 and outlet 120 rather than controlling the inflow and outflow rates independently, the inflow rate and the outflow rate may be controlled simultaneously with a constant or substantially constant flow rate (e.g., volume flowing through the cross-sectional area of the inlet 110 or outlet 120 per a unit time), thereby forming a flow in a steady state with a constant or substantially constant flow rate. As described below, the fluid level of the cooling fluid filling the accommodating space G may be increased to the fourth level h4, which is relatively higher than the third level h3 in a normal state, as the fluid pump 210 for forcing the inflow rate on the inlet 110 side increases, and the output and the fluid valve 220 for controlling the opening and closing of the outflow rate on the outlet 120 side is closed, in response to detection of the occurrence of an event.

In an embodiment, in response to the battery pack 100 being in a normal state, the control unit 140 may generate a flow in a steady state to maintain the fluid level of the cooling fluid constant (or substantially constant) in the accommodating space G inside the battery pack 100 (e.g., to maintain the fluid level of the cooling fluid at the third level h3). In response to the event occurring, the control unit 140 may increase the fluid level of the cooling fluid to the fourth level h4 higher than the third level h3 in a normal state. The cooling fluid at the relatively raised fourth level h4 may extinguish the flame ignited with the high-temperature exhaust gas from the vent 10' at the upper position of the battery cell 10 by immersing (submerging) the battery cell 10 to the upper position thereof. The cooling fluid may also block the generation of flames or propagation of flames ignited with high-temperature exhaust gas around the outlet 150' as the cooling fluid flows out through the outlet 150' of the housing 101 that provides a discharge path for exhaust gas.

In an embodiment, in response to an event occurring in at least one of the battery cells 10 accommodated in the battery pack 100, exhaust gas may be discharged through the vent 10' in the upper position of the battery cell 10, and the internal pressure of the accommodating space G accommodating the exhaust gas may increase. In response to the control unit 140 detecting the increase in pressure in the accommodating space G, the inflow rate generated by the fluid pump 210 connected to the inlet 110 side may increase so that the fluid level of the cooling fluid may be raised inside the battery pack 100, and the outflow rate may be reduced or blocked by the fluid valve 220 connected to the outlet 120. In an embodiment, the occurrence of an event in the battery pack 100 may be detected through the increase in pressure in the accommodating space G, and the pressure gauge 180 for measuring the internal pressure of the accommodating space G may be positioned inside the battery pack 100. For example, in an embodiment, the pressure gauge 180 may be positioned higher than the third level h3, which is the fluid level of the cooling fluid filling the accommodating space G in the battery pack 100 in a normal state. The pressure gauge 180 may measure the pressure of an empty space above the accommodating space G not filled with the cooling fluid, rather than the pressure of the cooling fluid, and may detect the occurrence of an event by detecting an increase in pressure due to the exhaust gas being discharged into the accommodating space G through the vent 10' formed at the upper position of the battery cell 10. In some embodiments, the pressure gauge 180 may be positioned lower than the third level h3, which is the fluid level of the cooling fluid in a normal state. The pressure of the exhaust gas filling the accommodating space G may be transmitted to the pressure gauge 180 immersed in the cooling fluid through the liquid level of the cooling fluid, and the occurrence of an event may be detected as a pressure greater than or equal to a preset threshold detected by the pressure gauge 180.

In an embodiment, controlling the inflow rate of the fluid pump 210 connected to the inlet 110 and the outflow rate of the fluid valve 220 connected to the outlet 120 to raise the fluid level of the cooling fluid inside the accommodating space G in response to an event occurring may refer to increasing the inflow rate generated by the fluid pump 210 and controlling the opening or closing of the fluid valve 220 to reduce or block the outflow rate of the fluid valve 220. For example, increasing the inflow rate of the fluid pump 210 may refer to relatively increasing the inflow rate through the inlet 110 in response to the event occurring compared to the inflow rate generated through the inlet 110 in the battery pack 100 in a normal state, and/or may refer to increasing the input current input to the fluid pump 210 to increase the output of the fluid pump 210. For example, reducing or blocking the outflow rate of the fluid valve 220 may refer to relatively reducing the outflow rate through the outlet 120 in response to the event occurring compared to the outflow rate through the outlet 120 in a normal state, and/or may refer to blocking or reducing the outflow rate through the outlet 120 by controlling the opening/closing or opening degree of the fluid valve 220 (e.g., closing the fluid valve 220 or reducing the degree of openness of the fluid valve 220).

In an embodiment, in response to an event occurring, the inflow rate through the inlet 110 may be increased and the outflow rate through the outlet 120 may be blocked (or at least reduced) to raise the fluid level of the cooling fluid inside the accommodating space G. In one or more embodiments, in response to an event occurring, the output of the fluid pump 210 connected to the inlet 110 may be increased, and the fluid valve 220 connected to the outlet 120 side may be closed.

In an embodiment, by increasing the inflow rate through the inlet 110 and blocking (or at least reducing) the outflow rate through the outlet 120 in response to an event occurring, the fluid level of the cooling fluid may be quickly increased inside the accommodating space G, and the progress of the event may be blocked (e.g., the chain fire or explosion of cells adjacent to the battery cell 10 where the event occurred, and/or the propagation of external fire or flames through the outlet 150' may be prevented). In one or more embodiments, the fluid level of the cooling fluid may be increased inside the accommodating space G in a shorter period of time by increasing the inflow rate through the inlet 110 and blocking the outflow rate of the cooling fluid through the outlet 120 compared to increasing the inflow rate through the inlet 110 and reducing the outflow rate through the outlet 120.

In an embodiment, the fluid valve 220 for controlling opening and closing of the outflow rate through the outlet 120 may be at the outlet 120 of the battery pack 100. The control unit 140 may open the fluid valve 220 in a normal state in which the occurrence of an event is not detected to allow the outflow rate through the outlet 120 from the opened fluid valve 220. The control unit 140 may close the fluid valve 220 at the outlet 120 or reduce the degree of openness of the cooling fluid in response to the detection of the occurrence of an event to reduce or block the outflow rate through the outlet 120. That is, in an embodiment, in response to detecting the occurrence of an event, the control unit 140 may increase the output of the fluid pump 210 connected to the inlet 110 to increase the inflow rate through the inlet 110, and may block or reduce the outflow rate through the outlet 120 below the outflow rate in a normal state by closing the fluid valve 220 connected to the outlet 120 or by reducing the degree of openness of the fluid valve 220.

In an embodiment, in response to detecting the occurrence of an event, the control unit 140 may control the inflow rate through the inlet 110 and the outflow rate through the outlet 120 together by controlling the opening/closing or degree of openness of the fluid valve 220 and the output of the fluid pump 210, or the control unit 140 may control the opening/closing or opening degree of the fluid valve 220 and the output of the fluid pump 210, separately.

In an embodiment, the inflow rate generated by the fluid pump 210 connected to the inlet 110 of the battery pack 100 and the outflow rate controlled by the fluid valve 220 connected to the outlet 120 of the battery pack 100 may be controlled independently and differently from each other. The fluid tank 250 may be connected between the fluid pump 210 and the fluid valve 220 of the cooling fluid circuitry 200 fluidly connected to the battery pack 100 to buffer the difference in the inflow rate of the inlet 110 and the outflow rate of the outlet 120. In one or more embodiments, in response to an event occurring, the inflow rate may be increased as the output of the fluid pump 210 connected to the inlet 110 increases, but the outflow rate may be reduced or blocked according to the opening/closing or degree of openness of the fluid valve 220 connected to the outlet 120. The fluid tank 250 may be connected between the fluid pump 210 and the fluid valve 220 to buffer the imbalance between the inflow rate and the outflow rate. In one or more embodiments, the fluid tank 250 may store extra cooling fluid or supply cooling fluid while buffering the imbalance between the inflow rate forced by the fluid pump 210 and the outflow rate controlled by the fluid valve 220.

In an embodiment, in response to an event occurring, the inflow rate through the inlet 110 may be increased by the fluid tank 250, rather than through circulation of the cooling fluid from the outflow rate through the outlet 120, and the cooling fluid stored in the fluid tank 250 may be supplied to increase the inflow rate through the inlet 110. The fluid tank 250 may store the cooling fluid cooled by the heat exchanger 230 and may maintain a relatively lower temperature of the cooling fluid and supply the cooling fluid flowing through the inlet 110 through the fluid pump 210.

The fluid tank 250 may receive the cooling fluid cooled from the heat exchanger 230 and provide a storage space for the cooling fluid and may provide a storage space insulated from an external environment to preserve the relatively cool temperature of the cooling fluid. The heat exchanger 230 connected to the cooling fluid circuitry 200 prior to the fluid tank 250 may be configured to cool the relatively high temperature cooling fluid discharged through the outlet 120 (e.g., the heat exchanger 230 may include a tube that accommodates the flow of a phase change material that involves a phase change between gas/liquid and that can be vaporized through heat from the cooling fluid). In an embodiment, the cooling fluid circuitry 200 connected between the inlet 110 and the outlet 120 of the battery pack 100 may have a relatively lower temperature section connected to the inlet 110 and a relatively higher temperature section connected to the outlet 120 before and after the heat exchanger 230.

In an embodiment, the pressure gauge 180 for detecting the occurrence of an event may be connected to the inlet 110 and/or the outlet 120 to which the fluid pump 210 and the fluid valve 220 are connected, respectively, and the operation of the fluid pump 210 and/or the fluid valve 220 connected to the inlet 110 and/or outlet 120 may be directly controlled by the pressure gauge 180 connected to the inlet 110 and/or outlet 120. In one or more embodiments, the exhaust gas discharged from the vent 10' on the upper position of the battery cell 10 may transmit pressure through the liquid level of the cooling fluid while filling the empty space in the accommodating space G above the liquid level of the cooling fluid. This increase in pressure in the accommodating space G may be transmitted to the inlet 110 and the outlet 120 for the inflow and outflow of the cooling fluid and may be detected by the pressure gauge 180 on the inlet 110 and/or outlet 120. Through the pressure gauge 180 on the inlet 110 and/or outlet 120, the inflow rate may be increased by increasing the output of the fluid pump 210 at the inlet 110, and the outflow rate may be reduced or blocked by adjusting the opening/closing or degree of openness of the fluid valve 220 on the outlet 120.

In some embodiments, the pressure gauge 180 may be in an empty space above the accommodating space G at a level higher than the liquid level of the cooling fluid to detect the pressure of the exhaust gas discharged toward the upper part of the accommodating space G, and may be at a level lower than the liquid level of the cooling fluid inside the accommodating space G to detect the pressure of the exhaust gas transmitted through the liquid level of the cooling fluid, or it may be on the inlet 110 and/or outlet 120 on the first surface S1 of the housing 101 to detect the pressure of exhaust gas transmitted through the liquid level of the cooling fluid. The pressure gauge 180 may be on either of the inlet 110 and the outlet 120 or both of the inlet 110 and the outlet 120 on the first surface S1 of the housing 101 to control operations of the fluid pump 210 and the fluid valve 220 connected to the inlet 110 and the outlet 120, respectively.

In an embodiment, the inlet 110 and the outlet 120 may be at the first level h1 and the second level h2, respectively, which are different from each other in the third direction Z3 on the first surface S1 of the housing 101. The cooling fluid may be supplied from the inlet 110 at the relatively low first level h1, may pass through the accommodating space G of the battery pack 100, and may be discharged through the outlet 120 at the relatively high second level h2. The second level h2 where the outlet 120 is located may be set to a height equal to or lower than the third level h3 corresponding to the fluid level of the cooling fluid in the battery pack 100 in a normal operating state to allow the cooling fluid to flow out from the battery pack 100 in a normal state. In one or more embodiments, the second level h2 where the outlet 120 is located may be set to a height equal to or lower than the third level h3 which is the fluid level of the cooling fluid in the battery pack 100 in a normal state and may be set to a height lower than the fourth level h4 which is the fluid level of the cooling fluid in the battery pack 100 in response to an event occurring. In an embodiment, the fluid level of the cooling fluid filling the accommodating space G may be increased in response to the occurrence of an event, and the fourth level h4 in the battery pack 100, which is set in response to an event occurring, may be higher than the third level h3, which is the level of the cooling fluid in response to the battery pack 100 being in a normal operating state. Thus, the second level h2 where the outlet 120 is located may be set to a height equal to or lower than the third level h3, which is lower than the fourth level h4.

As such, in an embodiment, the second level h2 where the outlet 120 is located may be at a height lower than the third level h3 corresponding to the fluid level of the cooling fluid of the battery cell 10 in a normal operating state. Since the third level h3 in a normal operating state may be lower than the height of the battery cell 10, the second level h2 where the outlet 120 is located may be lower than the height of the battery cell 10. As such, the exhaust gas of the battery cell 10 may be discharged into the accommodating space G through the vent 10' at the sixth level h6 corresponding to the height or highest height of the battery cell 10. In one or more embodiments, the second level h2 where the outlet 120 is located in the third direction Z3 is lower than the third level h3 which is the fluid level of the cooling fluid in a normal operating state, and the third level h3 which is the fluid level of the cooling fluid in a normal operating state is lower than the height of the battery cell 10 or the sixth level h6 of the vent 10' of the battery cell 10.

In an embodiment, the cover 150 may be positioned on the housing 101 in which the inlet 110 and the outlet 120 are located, and the outlet 150' of the cover 150 at the fifth level h5, which is the highest height of the battery pack 100 (e.g., the fifth level h5 equivalent to the height of the cover 150), may discharge the exhaust gas that is discharged from the battery cell 10 into the accommodating space G to the outside of the accommodating space G. The excess cooling fluid exceeding the volume of the accommodating space G or the excess cooling fluid flowing out from the accommodating space G may be discharged to the outside of the accommodating space G through the outlet 150'. In one or more embodiments, the fifth level h5 of the outlet 150' may be set to a higher level than the battery cell 10 so that the exhaust gas discharged from the vent 10' at the upper position of the battery cell 10 may be discharged to the outside.

In an embodiment, the fifth level h5 where the outlet 150' is located may be set substantially equal to the fourth level h4 which is the fluid level of the cooling fluid in the battery pack 100 in response to an event occurring. The excess cooling fluid remaining after filling the fourth level h4 may be discharged to the outside of the battery pack 100 through the outlet 150'. In addition, the fifth level h5 where the outlet 150' is located may be set higher than the third level h3, which is set to a height lower than the fourth level h4 that is the fluid level of the cooling fluid in the battery pack 100 in response to an event occurring. The fifth level h5 where the outlet 150' is located may be set to a height higher than the third level h3, which is the fluid level of the cooling fluid in the battery pack 100 in a normal operating state, and may be set to a height higher than the second level h2 where the outlet 120 is located, which is set to a height lower than the third level h3, which is the fluid level of the cooling fluid in a normal operating state.

In an embodiment, the fluid pump 210 and the fluid valve 220 connected to the inlet 110 and the outlet 120, respectively, of the battery pack 100 may be controlled to increase the output of the fluid pump 210 and/or to adjust the opening/closing or degree of openness of the fluid valve 220 in response to the occurrence of an event detected by the pressure gauge 180 for measuring the pressure of the accommodating space G. The output of the fluid pump 210 or the opening/closing or degree of openness of the fluid valve 220 may be controlled through an electrical measurement signal received from the pressure gauge 180, and, for example, may be controlled by the control unit 140, which receives the measurement signal from the pressure gauge 180, compares the measurement signal with a preset threshold value to determine whether an event has occurred, and outputs a control signal to increase the output of the fluid pump 210 and/or close the fluid valve 220 or adjust the degree openness of the fluid valve 220 depending on the result of the determination. In one or more embodiments, the control unit 140 may have any configuration (e.g., any shape and position) capable of outputting the control signal for the fluid pump 210 and the fluid valve 220. In one or more embodiments in which the control signal is output directly from the pressure gauge 180 that is configured to detect the pressure in the accommodating space G to the fluid pump 210 and the fluid valve 220, the pressure gauge 180 may be a combination of a measuring system for detecting pressure and the control unit 140 that captures the occurrence of an event through comparison of the detected pressure with a preset threshold value and outputs the control signal to the fluid pump 210 and the fluid valve 220.

In an embodiment, the battery pack 100 may include the first and second surfaces S1 and S2 arranged to face each other in the first direction Z1 along which the plurality of battery cells 10 are arranged. The inlet 110 and the outlet 120 for inflow and outflow, respectively, of the cooling fluid may be on the first surface S1, and the first and second terminals 131 and 132 forming charging and discharging paths of the battery pack 100 may be on the second surface S2. In an embodiment, the battery pack 100 or the housing 101 forming the outer shape of the battery pack 100 may have a rectangular or cuboid shape having long and short sides in the longitudinal and width directions, respectively. The first direction Z1 in which the battery cells 10 are arranged is the longitudinal direction and the second direction Z2 crossing the first direction Z1 is the width direction. For example, because the first surface S1 where the inlet 110 and the outlet 120 for the fluid connection of the battery pack 100 are positioned and the second surface S2 where the first and second terminals 131 and 132 for the electrical connection of the battery pack 100 are located face each other in the first direction Z1 corresponding to the longitudinal direction of the battery pack 100, the inlet 110 and the outlet 120 forming a fluid connection and the first and second terminals 131 and 132 forming an electrical connection may be spaced apart from each other as much as possible along the long side forming the length of the battery pack 100. For example, to avoid erroneous energization or short circuiting due to contact between the fluid connection and the electrical connection, the fluid connection and the electrical connection may be arranged on the first and second surfaces S1 and S2, respectively, in the longitudinal direction such that the distance between the fluid connections and the electrical connections is maximized along the first direction Z1.

In an embodiment, the cooling fluid may be an insulating fluid, for example, an insulating fluid configured not to create an electrical interference with the battery cell 10. In an embodiment, the plurality of battery cells 10 accommodated in the battery pack 100 may be surrounded by a relatively low temperature cooling fluid introduced through the inlet 110 in fluid communication with the accommodating space G and may be cooled through the liquid cooling, and heat exchange may be performed through a direct contact between the cooling fluid and the battery cell 10. The cooling fluid that receives heat from the battery cell 10 and is converted into a relatively high temperature state may be restored or returned to a low temperature state by passing through the heat exchanger 230 connected to the external cooling fluid circuitry 200 through the outlet 120. In an embodiment, the height difference between the first and second levels h1 and h2 of the inlet 110 and the outlet 120, respectively, in the third direction Z3 may cause the cooling fluid to partially surround the battery cell 10 in the third direction Z3 and surround at least a part between the bottom of the battery cell 10 at the lower position thereof and the vent 10' at an upper position thereof. The cooling fluid may surround the battery cell 10 at the third level h3 in a normal operating condition and surround the battery cell 10 at the fourth level h4 different from the third level h3 in response to an event occurring, which means that at least a part of the battery cell 10 between the bottom of the battery cell 10 and the vent 10' at an upper position of the battery cell 10 are surrounded by the cooling fluid.

In some embodiments, the cooling fluid may be an insulating fluid or a non-insulating fluid, and the battery cell 10 may include fluid sealing and electrical insulation so as not to cause fluid leakage and electrical short circuits from direct contact with the cooling fluid. In one or more embodiments, the battery cell 10 may include a fluid sealing, such as a gasket, at a position where the case of the battery cell 10 contacts an electrode 15 exposed thereon and where the case of the battery cell 10 contacts the vent 10' on the case, and may include electrical insulation, such as an insulating film.

In an embodiment, it is illustrated that when the discharge of exhaust gas from at least one battery cell 10 is detected by the pressure gauge 180 that captures or detects the increase in pressure of the battery cell 10, the inflow rate through the inlet 110 and the outflow rate through the outlet 120 are simultaneously controlled to increase the fluid level of the cooling fluid filling the accommodating space G from the third level h3 in a normal operating state to the fourth level h4 in response to an event occurring. In some embodiments, by controlling at least one of the inflow rate through the inlet 110 and the outflow rate through the outlet 120 in response to the occurrence of an event, the fluid level of the cooling fluid filling the accommodating space G may be raised from the third level h3 in a normal operating state to the fourth level h4 at the time of the event (or immediately following the event), and the outflow rate through the outlet 120 may be controlled in a way to increase the fluid level of the cooling fluid filling the accommodating space G in response to the occurrence of an event. In one or more embodiments, the fluid level of the cooling fluid may be raised in response to the event by reducing or blocking the outflow rate through the outlet 120. In one or more embodiments, the control unit 140 may control at least one of the fluid pump 210 connected to the inlet 110 and the fluid valve 220 connected to the outlet 120 to i) increase the output of the fluid pump 210 connected to the inlet 110, ii) decrease the degree of openness of the fluid valve 220 connected to the outlet 120 side, and/or iii) close the fluid valve 220 connected to the outlet 120 side.

According to an embodiment, a battery pack or a battery apparatus including the battery pack is lightweight and compact as cooling fluid and cooling fluid circuitry are used for cooling battery cells in a normal opening state in which an event is not detected and extinguishing the event in an abnormal state, without additional components. Cooling fluid circuitry may be included for controlling inflow and outflow rates of the cooling fluid, such as a fluid pump or a fluid valve connected to an inlet and an outlet, respectively, of the battery pack to generate the flow of the cooling fluid, and thus the battery pack may be protected and the spread of ignition or explosion to the outside may be blocked through efficient cooling of battery cells using immersion-type liquid cooling and rapid extinguishing of the event. In a normal state in which an event, such as ignition, explosion, or gas emission of battery cells, is not detected, the operating heat resulting from charging and discharging of battery cells may be quickly cooled through immersion-type liquid cooling of the battery cells, and in response to an event, such as ignition, explosion, or gas emission of battery cells, is detected, the event, such as ignition, explosion, or gas emission of battery cells, may be quickly extinguished using the cooling fluid by raising the fluid level of the cooling fluid to a preset elevated level in response to the event compared to the fluid level of the cooling fluid in a normal operating state.

The present invention also provides a method of cooling a battery pack as defined above or below in the following clauses, wherein the method comprises passing a flow of cooling fluid in contact with the plurality of battery cells through the inlet and the outlet for the inflow and the outflow of the cooling fluid.

Embodiments are set out in the following clauses:
Clause 1. A battery pack comprising:
   a plurality of battery cells;
   a housing that provides an accommodating space for accommodating the plurality of battery cells and a flow of a cooling fluid in contact with the plurality of battery cells, and is formed to include an inlet and an outlet for inflow and outflow of the cooling fluid;
   a pressure gauge positioned within the accommodating space and configured to detect an internal pressure in the accommodating space; and
   a control unit configured to control at least one of an inflow rate of the cooling fluid through the inlet and an outflow rate of the cooling fluid through the outlet in response to an increase in the internal pressure of the accommodating space detected by the pressure gauge.
Clause 2. The battery pack of clause 1, wherein the housing comprises a first surface on which the inlet and the outlet are formed together to form a U-turn path of the cooling fluid within the housing, and a second surface which faces the first surface in a first direction in which the plurality of battery cells are arranged and has first and second terminals for electrical connection of the plurality of battery cells.
Clause 3. The battery pack of clause 2, wherein the housing has a length in the first direction corresponding to a long side, a width in a second direction corresponding to a short side, and a height in a third direction that intersects the first and second directions, and
   the inlet and the outlet are respectively formed at a height of a first level which is relatively low and at a height of a second level which is relatively high in the third direction.
Clause 4. The battery pack of clause 3, wherein the inlet and the outlet are formed at different diagonal positions in the second direction and the third direction.
Clause 5. The battery pack of any one of the preceding clauses, wherein the control unit is further configured to raise the fluid level of the cooling fluid filling the accommodating space by controlling at least one of the inflow rate of the cooling fluid through the inlet and the outflow rate of the cooling fluid through the outlet in response to detection by the pressure gauge of occurrence of an event in which an exhaust gas is discharged from at least one battery cell among the plurality of battery cells.
Clause 6. The battery pack of clause 5, wherein a fluid pump is connected to the inlet side to force the inflow rate of the inlet,
   a fluid valve is connected to the outlet side to control opening/closing or opening degree of the outflow rate of the outlet, and
   the control unit is further configured to control at least one of the fluid pump and the fluid valve to i) increase the output of the fluid pump connected to the inlet side, ii) decrease the opening degree of the fluid valve connected to the outlet side, or iii) close the fluid valve connected to the outlet side.
Clause 7. The battery pack of clause 6, wherein the control unit is further configured to control both the fluid pump and the fluid valve to increase the inflow rate of the inlet and decrease the outflow rate of the outlet, thereby accelerating the rise of the fluid level of the cooling fluid.
Clause 8. The battery pack of clause 6 or clause 7, wherein the control unit is further configured to increase the output of the fluid pump on the inlet side and close the fluid valve on the outlet side to increase the inflow rate of the inlet and block the outflow rate of the outlet.
Clause 9. The battery pack of clause 6, wherein the control unit is further configured to open the fluid valve in a normal state in response to detection by the pressure gauge of no occurrence of an event, and close the fluid valve in response to detection by the pressure gauge of an occurrence of an event.
Clause 10. The battery pack of any one of clauses 5 to 9, wherein, when the occurrence of an event is detected through the pressure gauge, the control unit is further configured to raise the fluid level of the cooling fluid to a fourth level, which is higher than a third level, which is the fluid level of the cooling fluid in a normal state.
Clause 11. The battery pack of clause 10, further comprising a cover provided with an outlet formed at a fifth level higher than the battery cell and configured to discharge an exhaust gas from a vent formed at an upper position of at least one battery cell among the plurality of battery cells,
   wherein the control unit is further configured to increase the fluid level of the cooling fluid to the fourth level substantially equal to the fifth level in response to detection by the pressure gauge of the occurrence of an event.
Clause 12. The battery pack of clause 11, wherein, when the occurrence of an event is detected through the pressure gauge, the cooling fluid of which the fluid level has risen to the fourth level flows over through the outlet under the control of the control unit.
Clause 13. The battery pack of clause 10, clause 11 or clause 12, wherein, in a normal state in which the occurrence of an event is not detected through the pressure gauge, the third level of the cooling fluid filling the accommodating space is set to be higher than or equal to a second level where the outlet is formed.
Clause 14. A battery apparatus comprising:
   the battery pack of any one of the preceding clauses, and
   cooling fluid circuitry connected between the inlet and the outlet, wherein the cooling fluid circuitry includes:
      a fluid pump connected to the inlet side to force the inflow rate of the inlet;
      a fluid valve connected to the outlet side to control the opening/closing or opening degree of the outflow rate of the outlet;
      a heat exchanger connected between the fluid pump and the fluid valve to cool the cooling fluid changed to a high temperature state while passing through the accommodating space in which the plurality of battery cells are accommodated; and
      a fluid tank for storing the cooling fluid downstream of the heat exchanger.
Clause 15. The battery pack of clause 14, wherein the control unit is configured to raise the fluid level of the cooling fluid filling the accommodating space by controlling at least one of the inflow rate of the cooling fluid through the inlet and the outflow rate of the cooling fluid through the outlet in response to detection by the pressure gauge of an occurrence of an event in which an exhaust gas is discharged from at least one battery cell among the plurality of battery cells.
Clause 16. The battery pack of clause 15, wherein the control unit is further configured to control at least one of the fluid pump and the fluid valve to i) increase the output of the fluid pump, ii) decrease the opening degree of the fluid valve, or iii) close the fluid valve.
Clause 17. The battery pack of clause 16, wherein the control unit is further configured to control both the fluid pump and the fluid valve to increase the inflow rate of the inlet and decrease the outflow rate of the outlet, thereby accelerating the rise of the fluid level of the cooling fluid.
Clause 18. The battery pack of clause 16 or clause 17, wherein the control unit is further configured to increase the output of the fluid pump on the inlet side and close the fluid valve on the outlet side to increase the inflow rate of the inlet and block the outflow rate of the outlet.
Clause 19. The battery pack of any one of clauses 15 to 18, wherein, when the occurrence of an event is detected through the pressure gauge, the control unit is further configured to raise the fluid level of the cooling fluid to a fourth level, which is higher than a third level, which is the fluid level of the cooling fluid in a normal state.
Clause 20. The battery pack of clause 19, further comprising a cover provided with an outlet formed at a fifth level higher than the battery cell and configured to discharge the exhaust gas from a vent formed at an upper position of at least one battery cell among the plurality of battery cells,
   wherein the control unit is further configured to increase the fluid level of the cooling fluid to the fourth level substantially equal to the fifth level in response to detection by the pressure gauge of the occurrence of an event.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cells;
a housing comprising an accommodating space accommodating the plurality of battery cells and an inlet and an outlet for inflow and outflow of a cooling fluid in contact with the plurality of battery cells;
a pressure gauge within the accommodating space and configured to detect an internal pressure in the accommodating space; and
a control unit configured to control at least one of an inflow rate of the cooling fluid through the inlet or an outflow rate of the cooling fluid through the outlet in response to an increase in the internal pressure of the accommodating space being detected by the pressure gauge.

2. The battery pack of claim 1, wherein the housing comprises:
a first surface on which the inlet and the outlet are formed together to form a U-turn path of the cooling fluid within the housing, and
a second surface facing the first surface in a first direction in which the plurality of battery cells are arranged, the second surface comprising first and second terminals for electrical connection to the plurality of battery cells.

3. The battery pack of claim 1 or claim 2, wherein the housing has a length in the first direction corresponding to a long side, a width in a second direction corresponding to a short side, and a height in a third direction that intersects the first and second directions, and
wherein the inlet is at a first height that is relatively low and the outlet is at a second height that is relatively high in the third direction.

4. The battery pack of claim 3, wherein the inlet and the outlet are located at different diagonal positions in the second direction and the third direction.

5. The battery pack of any one of the preceding claims, wherein the control unit is further configured to raise a fluid level of the cooling fluid filling the accommodating space by controlling at least one of the inflow rate of the cooling fluid through the inlet or the outflow rate of the cooling fluid through the outlet in response to detection by the pressure gauge of an occurrence of an event in which an exhaust gas is discharged from at least one battery cell among the plurality of battery cells.

6. The battery pack of claim 5, further comprising:
a fluid pump connected to the inlet that is configured to force an inflow rate of the cooling fluid through the inlet; and
a fluid valve connected to the outlet that is configured to control an opening/closing or a degree of openness of an outflow rate of the cooling fluid through the outlet, and
wherein the control unit is further configured to control at least one of the fluid pump or the fluid valve to i) increase an output of the fluid pump connected to the inlet, ii) decrease the degree of openness of the fluid valve connected to the outlet, or iii) close the fluid valve connected to the outlet.

7. The battery pack of claim 6, wherein the control unit is further configured to control both the fluid pump and the fluid valve to increase the inflow rate of cooling fluid through the inlet or decrease the outflow rate of cooling fluid through the outlet, thereby accelerating a rise of the fluid level of the cooling fluid.

8. The battery pack of claim 6 or claim 7, wherein the control unit is further configured to increase an output of the fluid pump at the inlet and to close the fluid valve at the outlet to increase the inflow rate of cooling fluid through the inlet and to block the outflow rate of cooling fluid through the outlet.

9. The battery pack of any one of claims 6 to 8, wherein the control unit is further configured to open the fluid valve in response to detection by the pressure gauge of no occurrence of an event, and to close the fluid valve in response to detection by the pressure gauge of the occurrence of the event.

10. The battery pack of any one of the preceding claims, wherein, in response to the occurrence of an event is detected by the pressure gauge, the control unit is further configured to raise the fluid level of the cooling fluid to a fourth level higher than a third level, the third level being the fluid level of the cooling fluid in a normal operating state.

11. The battery pack of claim 10, further comprising a cover comprising an outlet at a fifth level higher than the battery cell, the outlet being configured to discharge an exhaust gas from a vent at an upper position of at least one battery cell among the plurality of battery cells,
wherein the control unit is further configured to increase the fluid level of the cooling fluid to a fourth level substantially equal to the fifth level in response to detection of the occurrence of an event by the pressure gauge.

12. The battery pack of claim 10 or claim 11, wherein, in response to the detection of the occurrence of an event by the pressure gauge, the cooling fluid of which the fluid level has risen to the fourth level flows over through the outlet under control of the control unit.

13. The battery pack of claim 10, claim 11 or claim 12, wherein, in a normal state in which the occurrence of an event is not detected by the pressure gauge, the third level of the cooling fluid filling the accommodating space is higher than or substantially equal to a second level at which the outlet is located.

14. A battery apparatus comprising:
the battery pack of any one of the preceding claim; and
cooling fluid circuitry connected between the inlet and the outlet, wherein the cooling fluid circuitry comprises:
a fluid pump connected to the inlet, the fluid pump being configured to generate an inflow rate of the cooling fluid through the inlet;
a fluid valve connected to the outlet, the fluid valve being configured to open and close or to change a degree of openness to control an outflow rate of the cooling fluid through the outlet;
a heat exchanger connected between the fluid pump and the fluid valve configured to cool the cooling fluid changed to a high temperature state while passing through the accommodating space in which the plurality of battery cells are accommodated; and
a fluid tank configured to store the cooling fluid downstream of the heat exchanger.

15. The battery apparatus of claim 14, wherein the control unit is further configured to control both the fluid pump and the fluid valve to increase the inflow rate of the cooling fluid through the inlet and to decrease the outflow rate of the cooling fluid through the outlet to accelerate a rise of the fluid level of the cooling fluid.
